Europäisches Patentamt

European Patent Office

Office européen des brevets

(19)

(11) Numéro de publication: **0 128 797**
A1

# (12) DEMANDE DE BREVET EUROPEEN

(21) Numéro de dépôt: **84401021.5**

(22) Date de dépôt: **18.05.84**

(51) Int. Cl.³: **G 01 S 7/28**, G 01 S 13/52,
H 03 K 13/02

---

(30) Priorité: **26.05.83 FR 8308728**

(43) Date de publication de la demande: **19.12.84**
**Bulletin 84/51**

(84) Etats contractants désignés: **DE GB IT NL**

(71) Demandeur: **THOMSON-CSF, 173, Boulevard Haussmann, F-75379 Paris Cedex 08 (FR)**

(72) Inventeur: **Lepere, Guy, THOMSON-CSF SCPI 173, bld Haussmann, F-75379 Paris Cedex 08 (FR)**
Inventeur: **Younes, Rolland, THOMSON-CSF SCPI 173, bld Haussmann, F-75379 Paris Cedex 08 (FR)**
Inventeur: **Melgar, Ramirez Cristobal, THOMSON-CSF SCPI 173, bld Haussmann, F-75379 Paris Cedex 08 (FR)**

(74) Mandataire: **Benoit, Monique et al, THOMSON-CSF SCPI 173, Bld Haussmann, F-75379 Paris Cedex 08 (FR)**

---

(54) **Récepteur pour système radar Doppler à impulsions.**

(57) Ce récepteur comprend, connectés en série, les éléments suivants: un amplificateur FI (21) dont la largeur de bande W est égale à n fois la largeur spectrale des impulsions émises, un détecteur cohérent FI (22) un codeur A/N qui opère à une fréquence d'échantillonnage Fs au moins égale à la bande passante W de l'amplificateur FI, et un filtre numérique (26) dont la réponse impulsionnelle est adaptée à la forme des impulsions émises. Selon une variante de réalisation le récepteur comporte deux voies de signal I et Q.

L'invention trouve son application dans les systèmes radar de visualisation des cibles mobiles.

EP 0 128 797 A1

# RECEPTEUR POUR SYSTEME RADAR DOPPLER
## A IMPULSIONS

La présente invention, d'une façon générale, se rapporte aux techniques numériques de traitement des signaux analogiques ; elle concerne plus particulièrement un récepteur pour système radar Doppler à impulsions.

Les structures de base et le fonctionnement des systèmes radar Doppler sont décrits dans diverses publications techniques, par exemple, l'on pourra consulter éventuellement l'ouvrage de M. I. SKOLNIK "Radar Handbook", 1970, édité par Mc Graw-Hill, en se rapportant plus particulièrement aux chapitres concernant les techniques de visualisation des cibles mobiles (VCM) mettant en oeuvre des techniques numériques de traitement des signaux échos fournis par le récepteur ; dans la littérature anglo-saxonne ces techniques numériques sont connues sous la dénomination DMTI (Digital Moving Target Indicator).

Dans les récepteurs radar VCM de l'état de la technique, la sortie de l'amplificateur sélectif à fréquence intermédiaire (FI) est connectée à deux détecteurs de phase qui opèrent en quadrature de phase pour fournir des signaux bipolaires à vidéofréquence représentant les composantes en phase (I) et en quadrature (Q) des signaux de sortie de l'amplificateur FI. La sortie de chacun de ces détecteurs de phase est connectée à un filtre passe-bas, la sortie duquel est échantillonnée par un échantillonneur-bloqueur commandé par un signal d'horloge synchrone du signal de déclenchement des impulsions d'émission. La fréquence de ce signal d'horloge est sensiblement égale à deux fois l'inverse de la durée d'impulsion ($\delta$). L'amplitude des échantillons de sortie de l'échantillonneur -bloqueur est codée sur $P_o$ niveaux par un codeur analogique-numérique pour fournir des mots de $N_o$ digits binaires tels que $P_o = 2^{No}$. Ultérieurement, un processeur numérique en temps réel, effectue sur les signaux numériques de sortie de chacun de ces deux codeurs A/N des opérations de filtrage destinées à discriminer les échos des cibles mobiles et à rejeter les échos des cibles fixes et de retour de sol.

Dans les recepteurs radar VCM de l'art antérieur, les éléments particulièrement critiques sont les échantillonneurs-bloqueurs et les codeurs A/N, lesquels éléments doivent opérer sur toute la dynamique d'amplitude des signaux échos. Dans la pratique on est conduit à réaliser des codeurs A/N capable de fournir un nombre élevé $P_o$ de niveaux, par exemple 4096 niveaux correspondant à des mots de 12 digits binaires, incluant le bit de signe, et ceci à des cadences de l'ordre de 1MHz ou plus. Ces dispositifs de codage numérique de l'amplitude instantanée des signaux de sortie des détecteurs de phase sont de réalisation délicate et leur coût de fabrication reste extrêment élevé. Un autre inconvénient de ces récepteurs radar de l'art antérieur est lié au fait que le filtre "adapté" aux signaux en impulsions transmis par l'émetteur du radar est réalisé en fréquence intermédiaire (FI) ; cependant on a déjà proposé de réaliser le filtre "adapté" en vidéofréquence sur chacune des voies de signal I et Q. Toutefois dans tous les cas, les filtres adaptés actuellement réalisés sont une approximation du filtre "adapté optimal" d'où il en résulte une première cause de dégradation de la performance de détection du système radar. Encore un autre inconvénient de ces récepteurs classiques, provient du fait que technologiquement, la cadence d'échantillonnage des signaux de sortie des détecteurs de phase demeure limitée si l'on ne peut sacrifier la performance de résolution d'amplitude (nombre de niveaux $P_o$). Aussi, même si le critère d'échantillonnage de NYQUIST-SHANON est respecté, c'est à dire, que la cadence d'échantillonnage des signaux de sortie des détecteurs de phase soit sensiblement égale à deux fois l'inverse de la durée des signaux en impulsions émis, les signaux échos ne sont pas toujours échantillonnés à l'instant précis où leur niveau est maximal. Il en résulte une seconde cause de dégradation de la performance de détection optimale du système radar.

Le but de l'invention est de remédier aux inconvénients précités des récepteurs radar de l'art antérieur.

Pour atteindre ce but, un récepteur pour système radar Doppler à impulsions, incluant un mélangeur d'entrée à fréquence microonde et un oscillateur local cohérent à fréquence intermédiaire, comprend : un générateur de signaux d'horloge qui est synchronisé par les signaux de déclenchement des impulsions émises, ce générateur de signaux fournissant un signal d'échantillonnage à une fréquence égale à 2.n fois la largeur spectrale des impulsions émises, et connecté au mélangeur d'entrée, un amplificateur à fréquence intermédiaire ayant une largeur de bande égale à la fréquence du signal d'échantillonnage, lequel amplificateur à fréquence intermédiaire est connecté à au moins une voie de signal qui comprend, connectés en série : un détecteur de phase commandé par le signal de sortie de l'oscillateur local cohérent à fréquence intermédiaire, un codeur analogique-numérique qui est synchronisé par le signal d'échantillonnage pour coder sur P niveaux le signal bipolaire de sortie du détecteur de phase, et un filtre numérique "adapté" aux signaux en impulsions émis pour fournir un signal numérique de sortie sur m.p niveaux, avec $m$ égal ou supérieur à $n$.

D'autres caractéristiques apparaitront dans la description détaillée de l'invention, faite en regard de dessins annexés ; sur ces dessins :

- la figure 1 est un bloc diagramme fonctionnel d'un récepteur radar de l'art antérieur.

- la figure 2 est un schéma fonctionnel d'un récepteur radar selon l'invention.

- la figure 3 est un schéma électrique d'une forme de réalisation du codeur analogique-numérique.

- la figure 4 est un schéma électrique d'un filtre numérique "adapté".

- la figure 5 représente la réponse impulsionnelle du filtre numérique de la figure 4.

- la figure 6 est un bloc diagramme fonctionnel d'une forme de réalisation du filtre numérique de la figure 4.

- la figure 7 est un schéma électrique d'un filtre numérique du type transverse.

- la figure 8 est un bloc diagramme fonctionnel d'un récepteur radar selon l'invention comprenant deux voies de signal I et Q.

- la figure 9 est un bloc diagramme fonctionnel d'un récepteur selon l'invention dans lequel est inclus un filtre VCM.

Avant d'aborder, la description détaillée de l'invention, on rappelera les notions de base relatives au filtre "adapté". Le filtre "adapté optimal" est celui pour lequel le rapport de la puissance du signal d'information à la puissance du bruit thermique du système radar est maximal ; c'est à dire que le filtre adapté optimal correspond à l'opération d'autocorrélation $\phi$ (o) du signal d'information s(t) :

$$\phi (o) = \int s^2 (t) \, dt$$

La réponse impulsionnelle h (t) du filtre adapté est :

$$h (t) = k_o s (T_o - t)$$

où s(t) est le signal d'information auquel le filtre est adapté.

To est le retard de temps nécessaire pour rendre le filtre physiquement réalisable et Ko une constante de gain arbitraire.

Le filtre adapté peut également être défini dans le domaine fréquence par :

$$H (f) = K_o \cdot e^{-j2 \, \pi f To} \cdot S (f)$$

où S (f) est la Transformée de FOURIER du signal d'information.

L'énergie du signal d'information pour l'impédance unitaire est :

$$Es = \int s^2(t)dt = \int /S(f)/^2 df$$

et l'énergie No du bruit thermique du système radar est :

$$No = KTs$$

où K est la constante de Boltzman et Ts la température de bruit du système radar.

Si la largeur de bande de bruit effective du filtre adapté a pour valeur $B_n$, le rapport signal/bruit (S/N) à la sortie de ce filtre est :

$$S/N = \frac{S^2(t)}{KT_sB_n} = \frac{E_s}{N_o}$$

Dans les systèmes radar, les codeurs A/N opèrent en temps réel sur les signaux de sortie du récepteur et doivent fonctionner à une cadence élevée, de l'ordre de 1MHz, ou plus, comme indiqué dans le préambule de la description, et dans le même temps, il est souhaitable de coder numériquement l'amplitude les échantillons prélevés sur 10 à 12 bits selon le facteur de VCM nécessaire. Les efforts pour obtenir une résolution élevée des codeurs A/N peuvent conduire à ce que le dernier bit (LSB) soit une valeur aléatoire qui reflète plus le bruit interne des circuits et des sources d'alimentation que le niveau réel de l'échantillon à coder. L'incertitude sur ce dernier bit est connue comme le bruit de codage et il dépend du type de codeur A/N utilisé. Même si le codeur A/N est parfait, des bruits apparaissent, du fait que le nombre $P_o$ de niveaux de codage est toujours limité, d'où il en résulte une seconde source de bruit qui est connue comme le bruit de quantification du codeur A/N.

Les considérations ci-dessus doivent toujours être prises en compte lors de la conception du récepteur d'un système radar Doppler.

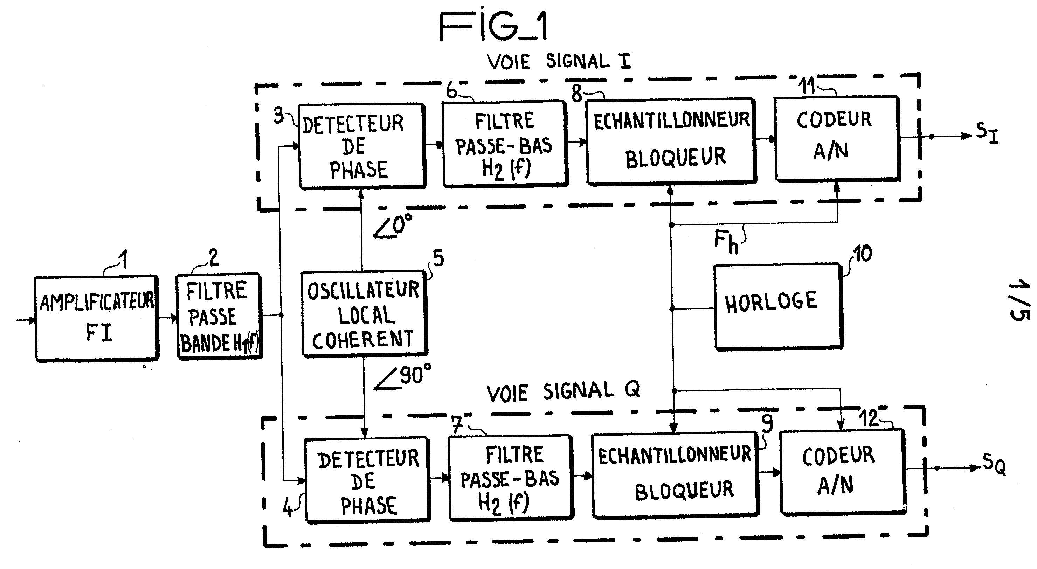

La figure 1 est un bloc diagramme fonctionnel qui représente une forme de réalisation classique d'un récepteur radar de l'art antérieur qui délivre des signaux de sortie sous la forme d'échantillons codés. Dans ce récepteur, un amplificateur sélectif 1 qui opère à une fréquence intermédiaire (FI) reçoit sur son entrée les signaux de sortie d'un mélangeur d'entrée à fréquence microonde, (non représenté sur cette figure). On peut toutefois noter que dans certaines formes de construction le récepteur comporte un second changement de fréquence situé entre le mélangeur microonde et l'amplificateur selectif 1 dans le but de rejeter la fréquence image. L'amplificateur sélectif 1 comporte un filtre passe-bande 2, ayant une fonction de transfert en fréquence $H_1(f)$ centrée sur la valeur de la fréquence intermédiaire FI. Les signaux de sortie de cet amplificateur FI sont formés des signaux radar qui sont superposés au bruit thermique généré par le système radar, et ces signaux de sortie sont appliqués aux entrées de deux voies de signal : une voie de signal I et une voie de signal Q. Chacune de ces voies de signal I et Q comporte un détecteur de phase 3 et 4 et ces détecteurs de phase sont commandés respectivement par les signaux de sortie en quadrature d'un oscillateur local cohérent 5. Ces deux détecteurs de phase fournissent des signaux vidéofréquence bipolaires qui correspondent aux composantes orthogonales des signaux d'entrée et ces signaux sont appliqués respectivement à des filtres passe-bas 6 et 7 identiques ayant une fonction de transfert $H_2$ (f). Les fonctions de transfert $H_1$ (f) du filtre passe-bande 2, et $H_2$ (f) des filtres passe-bas 6 et 7 sont telles que le produit $H_1$ (f). $H_2$ (f) soit une approximation de la fonction de transfert en fréquence H (f) du filtre adapté aux signaux en impulsions émis par le système radar. La sortie de chacun de ces filtres passe-bas 6 et 7 sont échantillonnée par les échantillonneur-bloqueurs 8 et 9 et ces échantillonneur-bloqueurs sont commandés par un signal d'échantillonnage fourni par un circuit d'horloge 10 qui opère en synchronisme avec les signaux en impulsions émis par le système radar. La cadence de ce signal d'échantillonnage est sensiblement égale à Fh = 2 k/$\delta$, ou $\delta$ est la durée d'impulsions des signaux d'émission et k un facteur de proportionnalité qui dépend de la forme particulière des impulsions et est de l'ordre de 0,6 dans le cas d'impulsions standards. Les échantillonneur-bloqueurs 8 et 9 sont connectés respectivement à des codeurs analogique-numériques (A/N) 11 et 12 commandés par un signal dérivé du signal d'échantillonnage. Ces codeurs A/N sont d'un type à résolution élevée par exemple, capable de coder l'amplitude de chaque échantillon sur 12 bits et ils opèrent à une cadence de l'ordre du MHz. Les échantillons codés $S_I$ et $S_Q$ respectivement disponibles à la sortie des voies de signal I et Q sont fournis à un processeur numérique qui filtre les signaux de "clutter" et extrait les signaux réfléchis par les cibles ayant une composante de vitesse radiale par rapport au système radar.

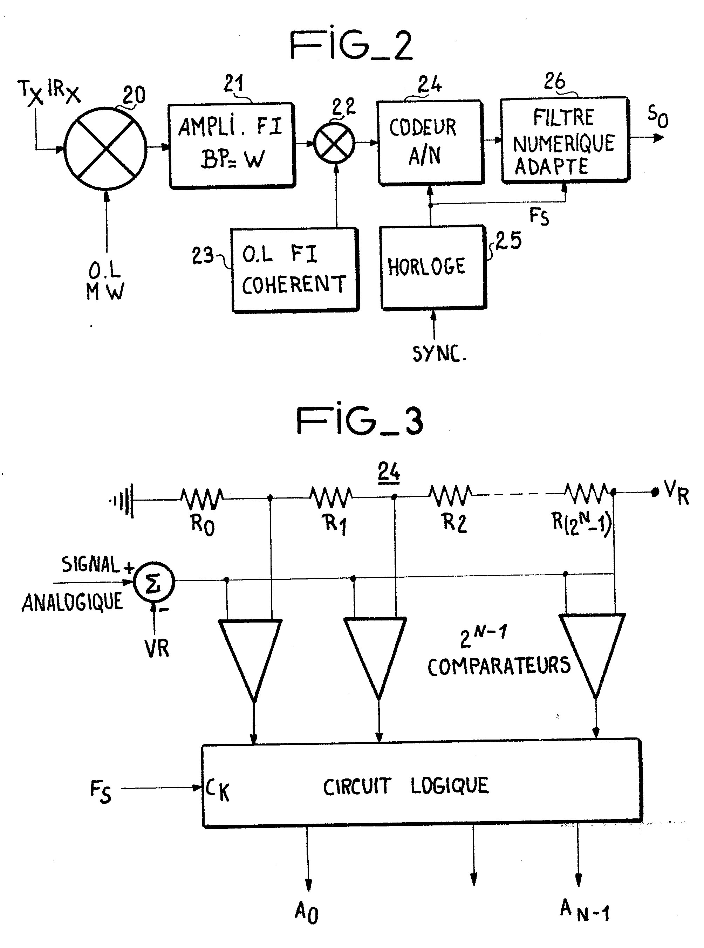

La figure 2 est un bloc diagramme fonctionnel d'un récepteur radar selon l'invention ayant une unique voie de signal. Ce récepteur comprend notamment, une mélangeur d'entrée 20 à fréquence microonde dont les entrées signal et référence sont reliées respectivement au dispositif duplexeur Tx/Rx et à l'oscillateur local microonde (MW) du système radar. La sortie de ce mélangeur microonde est connectée à un amplificateur 21 qui opère à une fréquence intermédiaire FI et la largeur de bande, ou bande passante W, de cet amplificateur FI a une valeur sensiblement égale $2.n$ fois la largeur spectrale $k/\delta$ des signaux en impulsions rayonnés par l'antenne ; la signification des paramètres $k$ et $\delta$ a été définie précédemment. La sortie de l'amplificateur 21 à fréquence intermédiaire est connectée à un détecteur de phase 22 contrôlé par le signal de sortie d'un oscillateur cohérent 23 à fréquence intermédiaire (FI). Les signaux de sortie de ce détecteur de phase sont appliqués à un codeur A/N 24 commandé par un signal d'échantillonnage délivré par un générateur de signaux d'horloge 25. La fréquence de ce signal d'échantillonnage à une valeur $F_s$ sensiblement égale à $2.n.k/\delta$, donc à la largeur de bande $\underline{W}$ de l'amplificateur 21, à fréquence intermédiaire et ce signal d'horloge est synchronisé par le signal de déclenchement SYNC. des impulsions d'émission. Ce codeur A/N permet de coder le signal bipolaire analogique du détecteur de phase sur P niveaux, et il délivre des échantillons codés sous la forme de mots binaires de N digits binaires, tel que $P = 2^N$, et à une cadence égale à la fréquence Fs du signal d'échantillonnage. Ces échantillons codés sont appliqués à l'entrée d'un filtre numérique 26 dont la réponse impulsionnelle $h(t)$ est adaptée au signal en impulsion transmis par l'émetteur radar, et ce filtre numérique opère sur $n$ échantillons consécutifs. Il en résulte que les signaux de sortie $S_o$ de ce filtre numérique "adapté" sont formés d'échantillons codés sous la forme de mots de $n.p$ digits et à une cadence Fs. Ce filtre numérique adapté apporte sur le signal un gain $20 \, Log.\underline{n}$ et sur le bruit un gain de $10 \, Log.\underline{n}$, d'où une amélioration du rapport signal/bruit à la sortie du filtre numérique

de 10 Log.$\underline{n}$. La dynamique du signal utile est donc également augmentée de 10 Log.$\underline{n}$. Ce récepteur se comporte sensiblement comme un récepteur classique, toutefois à la sortie du récepteur on dispose d'information, codées à une fréquence $\underline{n}$ fois supérieure à celle du récepteur classique, le nombre des niveaux de quantification est égal à n.p sensiblement égal ou supérieur au nombre $P_o$ de niveaux d'un récepteur classique et le filtre adapté peut approcher le filtre adapté optimal. Dans la pratique, par exemple, la valeur de n peut être comprise entre 8 et 24 si la valeur du P est de l'ordre de 256. Toutefois, on devra noter que la largeur de bande W de l'amplificateur FI 21 étant n fois supérieure à celle de l'amplificateur Fi d'un récepteur classique, la valeur de la fréquence Fi doit être plus importante, par exemple de l'ordre de 200 à 300MHz, ce qui peut présenter un avantage, puisque le récepteur ne comportera qu'une unique transposition de fréquence. Les échantillons codés du signal de sortie $S_o$ sont fournis à un processeur numérique en vue d'un traitement ultérieur comme indiqué précédemment.

On peut noter que si le système radar fonctionne avec des durées d'impulsion variables $(\delta_o, \delta_1, \delta \cdots_n)$ avec $\delta_o$ la durée d'impulsion la plus courte, le filtre numerique adapté 26 doit opérer sur un nombre $\underline{m}$ d'échantillons codés proportionnel à la durée d'impulsion considérée. Si la valeur de $\underline{n}$ correspond à l'impulsion de plus courte durée, les valeurs de $\underline{m}$ $(m_1, \ldots m_n)$ sont toujours supérieures à la valeur de $\underline{n}$.

La figure 3 est un schéma électrique d'un codeur A/N sur N bits qui peut être utilisé pour réaliser le codeur A/N 24 de la figure 2. Ce type de codeur A/N est connu sous le nom de "codeur A/N simultané", et toutes les opérations apparaissent simultanément. Dans ce codeur A/N une série de $(2^N - 1)$ comparateurs de tension effectuent des décisions indépendantes quant à la grandeur de la tension analogique à coder par rapport à $2^N$ niveaux de quantification fournis par un réseau de résistances $R_o$ à R $(2^N-1)$, toutes de valeur identique, et ce réseau est connecté à une source de tension de référence $V_R$ calibrée. Pour permettre de coder des signaux analogiques bipolaires, une tension de décalage $V_o = V_R/2$ est insérée dans la voie d'entrée du codeur. Un circuit logique ayant ($2^N$-1) entrées est commandé par un signal d'échantillonnage (Fs) et convertit les décisions en mots binaires de N bits. (As-$A_{n-1}$), dont un bit de signe. Ce codeur A/N simultané, apparamment complexe, du fait des ($2^N$-1) comparateurs de tension nécessaires, est maintenant aisément réalisable selon une technique d'intégration à grande échelle (LSI). Par exemple, le modèle "TDC 1025 E 1 C" produit par la firme américaine TRW permet de coder l'amplitude de signaux analogiques sur 256 niveaux (N=8 bits) à des cadences de l'ordre de 75MHz. De plus, on pourra noter que ce type de codeur A/N ne nécessite pas de disposer d'un échantillonneur-bloqueur d'entrée.

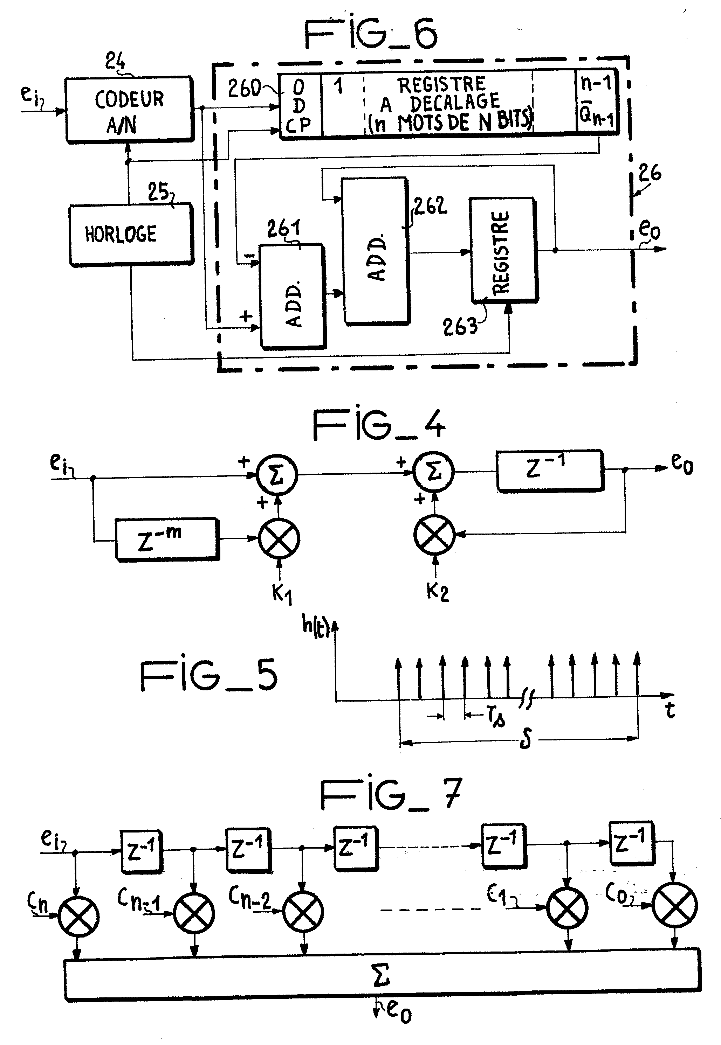

La figure 4 est un schéma électrique d'un filtre numérique qui peut être utilisé pour réaliser le filtre adapté 26 de la figure 2. Dans cette configuration de filtre, le signal d'entrée $e_i$ échantillonné est appliqué aux entrées d'un premier additionneur dans l'une des entrées duquel sont insérés un élément de retard $Z^{-m}$ (avec $Z=e^{j\omega T_s}$) et un multiplicateur par un facteur K1. La sortie de ce premier additionneur est connectée à l'entrée d'un intégrateur affecté d'un coefficient $K_2$ et le signal de sortie $e_o$ de ce filtre est prélevé à la sortie de l'intégrateur. Si le signal d'entrée $e_i$ est un signal rectangulaire échantillonné avec une période $T_s$, la valeur du coefficient K1 est fixée égale à -1 et la valeur du coefficient K2 est fixée égale à l'unité, ainsi la fonction de transfert en $\underline{Z}$ correspondante est :

$$H(z) = \frac{e_o}{e_i} = \frac{Z^m-1}{Z^{m+1}-Z^m}$$

D'autre part, si la durée S du signal rectangulaire est égale à $mT_s$, la fonction de transfert en fréquence du filtre est :

$$H(f) = \frac{\mathrm{Sin}\ \pi f \delta}{\pi f \delta}$$

La réponse impulsionnelle du filtre est représentée à la figure 5, elle correspond à un signal de durée $\delta = nT_s$.

On pourra noter que le filtre de la figure 4, est formé de deux sections : une première section qui est constituée par un différentiateur et une seconde section qui est constituée par un intégrateur.

La figure 6 est un bloc diagramme fonctionnel qui représente une forme de réalisation du filtre décrit à la figure 4. Les échantillons codés délivrés par le codeur A/N 24 sont appliqués à l'entrée (D) d'un élément de retard numérique 260 de durée égale à la durée des impulsions émises. L'entrée et la sortie complémentée ($\bar{Q}_{n-1}$) de cet élément de retard sont connectées aux entrées d'un premier additionneur 261. La sortie de ce premier additionneur est fournie à un accumulateur constitué par un second additionneur 262 et un registre 263 bouclé sur la seconde entrée de ce second additionneur, et ce registre 263 est commandé par le générateur 25 de signaux d'horloge. L'élément de retard numérique 260 peut être constitué par un registre à décalage à n étages de Nbits, et l'entrée de décalage (CP) est connectée au générateur de signaux d'horloge 25. On pourra noter que ce registre à décalage peut être du type programmable pour permettre de varier la durée de retard et ainsi la fréquence de coupure du filtre. Selon une variante de réalisation de l'élément de retard 260, celui-ci peut être constitué par une mémoire FI FO (premier entré-premier sorti) ayant un nombre $\underline{m}$ de registres avec $\underline{m}$ plus grand que $\underline{n}$. On voit maintenant qu'il est possible, en conservant les mêmes éléments d'adapter facilement le filtre à différentes durées d'impulsions. Cette propriété peut être exploitée lorsque le système radar fonctionne avec des impulsions de durée variable.

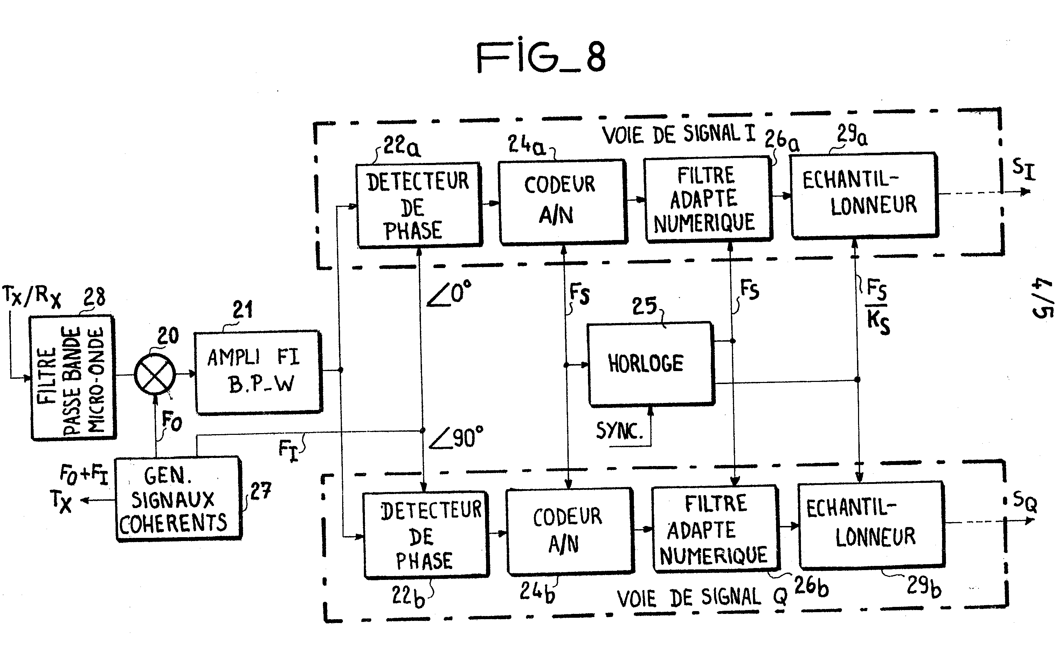

La figure 7 est un schéma électrique qui représente la configuration d'un filtre transverse numérique qui peut également être utilisé pour réaliser le filtre adapté numérique 26 de la figure 2. Dans ce type de filtre n éléments de retard $Z^{-1}$ sont disposés en série, et (n+1) multiplicateurs sont connectés respectivement aux points de jonction des éléments de retard. Ces multiplicateurs sont affectés d'un coefficient de pondération, respectivement $C_o$ à $C_{n-1}$ et les sorties de ces multiplicateur sont sommées. Par ajustement de la valeur des coefficients de pondération Ci, la réponse impulsionnelle du filtre peut être formée et adaptée à différentes formes d'impulsions. Par exemple, pour obtenir une réponse impulsionnelle de forme rectangulaire tous les coefficients $C_o$ à $C_{n-1}$ des multiplicateurs sont égaux à l'unité. Ce type de filtre apparamment complexe peut être réalisé selon une technique d'intégration à grande échelle (LSI) et par tranches (Bit-Slice). Un exemple d'un tel filtre est fourni par le "Modèle TDC 1028" produit par la firme américaine TRW. Différentes tranches peuvent être connectées en cascade pour accroître le nombre de sections du filtre, et interconnectées en parallèle pour accroître la taille des mots binaires des signaux d'entrée et/ou des coefficients de pondération. On voit que ce type de filtre transverse présente une grande souplesse d'utilisation et permet d'adapter la réponse impulsionnelle à des formes et des durées d'impulsions variées.

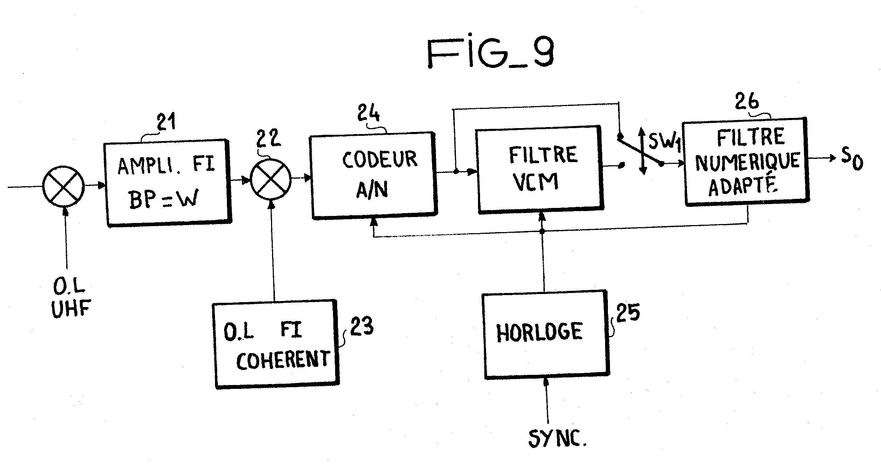

La figure 8 se réfère à la figure 2, et sous la forme d'un bloc diagramme représente un récepteur radar comprenant deux voies de signal I et Q. L'entrée du mélangeur microonde 20 du récepteur est couplée à un dispositif duplexeur Tx/Rx, non représenté, par l'intermédiaire d'un filtre passe-bande microonde 28 qui permet de rejeter les signaux d'interférence à la fréquence image. L'entrée de référence du mélangeur microonde 20 est connectée à un générateur de signaux cohérents qui délivre : le signal de référence à une fréquence microonde Fo, un signal à une fréquence microonde Fo+Fi qui est découpé et amplifié dans le sous-ensemble d'émission Tx et un signal de référence à fréquence FI qui est fourni aux deux détecteurs de phase 22a et 22b. L'amplificateur FI comme décrit précédemment est un amplificateur sélectif dont la bande passante a une valeur W, centrée sur la fréquence FI. La sortie de l'amplificateur FI est fournie à deux voies de signal identiques I et Q dans lesquelles les détecteurs de phase opèrent en quadrature de phase. Le générateur de signaux d'horloge 25 est synchronisé par le signal de déclenchement SYNC. des impulsions d'émission. Ce générateur de signaux d'horloge délivre : des signaux d'échantillonnage qui contrôlent le fonctionnement des codeurs A/N 24d et 24b et des signaux synchrones de séquencement des éléments des filtres adaptés numériques 26a et 26b.

Les signaux de sortie des filtres adaptés comportent un certain degré de redondance et de ce fait, il est possible, à l'aide d'échantillonneurs 29a et 29b de ne retenir que 1 parmi n de ces signaux de sortie. A cet effet le générateur de signaux d'horloge comporte un diviseur de fréquence, par un facteur $K_s = 1/n$, qui délivre des signaux à une fréquence $F_s/K_s$ où $F_s$ est la fréquence du signal d'échantillonnage. Il faut noter, cependant, que ces échantillonneurs 29a et 29b sont des éléments optionnels et qu'en leur absence, les signaux de sortie $S_I$ et $S_Q$ reproduisent sensiblement sous une forme numérique, les signaux analogiques d'entrée.

A titre indicatif, les codeurs A/N peuvent coder l'amplitude des signaux analogiques sur 256 niveaux, et la valeur de $\underline{n}$ peut être choisie de l'ordre de 16 ce qui permet de disposer des signaux de sortie $S_I$ et $S_Q$ sur 4096 niveaux.

La figure 9 est un bloc diagramme fonctionnel qui représente une variante de réalisation du récepteur de la figure 2. On peut remarquer que le filtre numérique adapté 26 étant un élément linéaire, il est possible d'insérer un filtre VCM 100 entre le codeur A/N 24 et le filtre adapté 26 ; la fonction du filtre VCM est de rejeter les signaux échos indésirables. Ce filtre VCM, peut être, par exemple, constitué par un filtre numérique classique ayant des zéros de transmission localisés sur les multiples de la fréquence de récurrence des impulsions d'émission. L'entrée de séquencement de ce filtre VCM est également reliée au générateur de signaux d'horloge (25). La zone de fonctionnement du filtre VCM peut être limitée aux zones proches, à cet effet un inverseur $SW_1$ est inséré entre le filtre adapté 26 et la sortie du filtre VCM et la seconde entrée de l'inverseur est connectée à la sortie du codeur A/N. Les signaux de sortie $S_o$ du filtre adapté 26 sont fournis éventuellement à un processeur complémentaire et à un indicateur de visualisation des cibles mobiles. Cette variante de réalisation s'applique également au récepteur de la figure 8, dans ce cas, un filtre VCM est inséré entre le codeur A/N 26a ou 26b et le filtre adapté 29a ou 26b de chacune des voies de signal I et Q.

On voit maintenant plus clairement les avantages que fournit l'invention. Notamment, le maillon le plus faible du récepteur qui est constitué par l'échantillonneur-bloqueur et le codeur analogique-numérique, peut être maintenant réalisé aisément. Le codeur A/N est un composant à faible coût. La performance de détection du système radar est sensiblement améliorée du fait, d'une part du suréchantillonnage des signaux à vidéofréquence, et, d'autre part, de la possibilité d'adapter la réponse impulsionnelle du filtre de sortie à la forme des signaux en impulsions émis. De plus le récepteur peut comporter un unique transposeur de fréquence.

L'invention n'est pas limitée dans ses applications et ses caractéristiques au récepteur décrit à titre illustratif. Notamment le système radar Doppler peut être du type cohérent comprenant un émetteur à tube magnétron. D'un autre côté d'autres formes de réalisation du codeur A/N et du filtre numérique adapté sont envisageables.

Un récepteur radar selon l'invention, d'un manière générale trouve son application dans les systèmes de transmission de signaux en impulsions et notamment dans les systèmes radar Doppler.

## REVENDICATIONS

1.  Récepteur pour système radar Doppler à impulsions, comprenant un amplificateur sélectif (21) à fréquence intermédiaire qui est connecté à, au moins, un détecteur de phase (23) pour fournir un signal bipolaire à vidéofréquence, caractérisé en ce que le signal de sortie du détecteur de phase (22) est échantillonné et codé en amplitude sur P niveaux à une fréquence d'échantillonnage (Fs) notablement supérieure à la fréquence d'échantillonnage minimale de NYQUIST et que ces échantillons codés sont appliqués à un filtre "adapté" numérique(26) et en ce que l'amplificateur sélectif à fréquence intermédiaire (21) à une bande passante (W) sensiblement égale à la fréquence d'échantillonnage (Fs).

2.  Récepteur pour système radar Doppler à impulsions, incluant un mélangeur d'entrée (20) à fréquence microonde et un oscillateur local cohérent (23) à fréquence intermédiaire, caractérisé en ce qu'il comprend : un générateur de signaux d'horloge (25) qui est synchronisé par les signaux de déclenchement des impulsions émises, ce générateur fournissant un signal d'échantillonnage à une fréquence $(F_s)$égal à $\underline{2n}$ fois la largeur spectrale des impulsions émises, et connecté au mélangeur d'entrée (20), un amplificateur (21) à fréquence intermédiaire ayant une largeur de bande (W) égale sensiblement à la fréquence du signal d'échantillonnage, lequel amplificateur (21) à fréquence intermédiaire est connecté à au moins une voie de signal qui comprend ; connectés en série : un détecteur de phase (22) contrôlé par le signal de sortie de l'oscillateur local (23) à fréquence intermédiaire, un codeur analogique-numérique (24) qui est commandé par le signal d'échantillonnage, pour coder sur P niveaux le signal bipolaire à vidéofréquence délivré par le détecteur de phase (22), et un filtre numérique "adapté" aux signaux en impulsions émis pour fournir un signal numérique de sortie codé sur m.P niveaux, avec $\underline{m}$ égal ou supérieur à $\underline{n}$.

3.  Récepteur selon la revendication 2, caractérisé en ce que le codeur analogique-numérique (24) est du type "simultané" qui comprend $(2^N-1)$ comparateurs de tension qui opèrent en parallèle et tel que $(2^N-1) = P$ le nombre de niveaux de quantification.

4. Récepteur selon les revendications 2 ou 3, caractérisé en ce que le filtre numérique (26) est un filtre "transverse" ayant $\underline{n}$ sections et dans lequel les valeurs des coefficients $(C_o$ à $C_{n-1})$ des multiplicateurs sont ajustés pour fournir une réponse impulsionnelle adaptée à la forme des signaux en impulsions émis.

5. Récepteur selon les revendications 2 ou 3, caractérisé en ce que le filtre numérique (26) est un filtre comprenant deux sections : une première section constituée par un différentateur (260 et 261) et une seconde section constituée par un intégrateur (262 et 263).

6. Récepteur selon la revendication 5; dans lequel la première section du filtre numérique comprend un additionneur (261) dont l'une des deux entrées est reliée à la sortie complémentée $(Q_{n-1})$ d'un élément de retard (260), caractérisé en ce que cet élément de retard est constitué par une mémoire FIFO.

7. Récepteur selon la revendication 2, caractérisé en ce qu'il comprend un filtre VCM (100) qui est inséré entre le codeur analogique-numérique (24) et le filtre numérique (26).

8. Récepteur selon la revendication 1 ou 2, caractérisé en ce que le filtre numérique (24) est connecté à un échantillonneur (29) dont l'entrée de commande est connecté à une sortie du générateur de signaux d'horloge (25) qui fournit un signal de commande dont la fréquence est un sous-multiple de la fréquence $(F_s)$ du signal d'échantillonnage.

9. Récepteur selon la revendication 2, caractérisé en ce que l'amplificateur sélectif à fréquence intermédiaire est connecté à une seconde voie de signal identique à la première voie de signal et en ce que les détecteurs de phase (23a , 23b) opèrent en quadrature de phase pour fournir des voies de signal I et Q.

# FIG_1

VOIE SIGNAL I

VOIE SIGNAL Q

1/5

0128797

## FIG_2

$T_X$ I$R_X$ — 20 — AMPLI. FI BP= W — 21 — 22 — CODEUR A/N — 24 — FILTRE NUMERIQUE ADAPTE — 26 — $S_0$

O.L M W

23 — O.L FI COHERENT

HORLOGE — 25

$F_S$

SYNC.

## FIG_3

24

$R_0$  $R_1$  $R_2$  $R_{(2^N-1)}$  $V_R$

SIGNAL ANALOGIQUE $\Sigma$

VR

$2^{N-1}$ COMPARATEURS

$F_S$  $C_K$  CIRCUIT LOGIQUE

$A_0$  $A_{N-1}$

FIG_6

$e_i$ → CODEUR A/N `24`

260 → | 0 D CP | 1 | REGISTRE A DECALAGE (n MOTS DE N BITS) | n-1 $\overline{Q}_{n-1}$ |

HORLOGE `25`

`261` ADD.

`262` ADD.

`263` REGISTRE → $e_0$

`26`

FIG_4

$e_i$ → + Σ → + Σ → $Z^{-1}$ → $e_0$

$Z^{-m}$ → ⊗ $K_1$

⊗ $K_2$

FIG_5

$h(t)$

$T_\delta$

$\delta$

$t$

FIG_7

$e_i$ → $Z^{-1}$ → $Z^{-1}$ → $Z^{-1}$ → $Z^{-1}$ → $Z^{-1}$

$c_n$ ⊗   $c_{n-1}$ ⊗   $c_{n-2}$ ⊗   $c_1$ ⊗   $c_0$ ⊗

Σ

$e_0$

FIG_8

# FIG_9

AMPLI. FI BP=W — 21

CODEUR A/N — 24

FILTRE VCM

FILTRE NUMERIQUE ADAPTÉ — 26

S₀

SW₁

O.L UHF

O.L FI COHERENT — 23

HORLOGE — 25

SYNC.

Office européen
des brevets

RAPPORT DE RECHERCHE EUROPEENNE

0128797

EP 84 40 1021

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 443 168 (PHILIPS' GLOEILAMPENFABRIEKEN) * figure 8; page 2, ligne 36 - page 4, ligne 10; page 8, ligne 32 - page 10, ligne 8; page 10, ligne 33 - page 12, ligne 29 * | 1-3,5, 7-9 | G 01 S 7/28 G 01 S 13/52 H 03 K 13/02 |
| | --- | | |
| Y | US-A-3 950 750 (F.E. CHURCHILL et al.) * figures 1,3; colonne 2, ligne 53 - colonne 3, ligne 48 * | 1-3,5, 7-9 | |
| | --- | | |
| Y | COLLOQUE INTERNATIONAL SUR L'ELECTRONIQUE NUCLEAIRE, 10-13 septembre 1968, Versailles (FR), Société Francaise des Electroniciens et des Radioélectriciens, Paris (FR); C. BONSIGNORI et al.: "A new 4096 channel fast converter for nuclear spectrometry", pages 88-1 - 88-13. * figures 4,5; page 88-4, lignes 6-27 * | 3 | |
| | --- | | |
| A | FR-A-2 335 104 (HUGHES AIRCRAFT) | | |
| | ----- | | |

**DOMAINES TECHNIQUES RECHERCHES (Int. Cl. 3)**

G 01 S
H 03 K

Le présent rapport de recherche a été établi pour toutes les revendications

| Lieu de la recherche | Date d'achèvement de la recherche | Examinateur |
|---|---|---|
| LA HAYE | 28-08-1984 | CANNARD J.M. |